# FASCICULE DE BREVET EUROPEEN

(11) **EP 1 399 248 B1**
(45) Date de publication et mention de la délivrance du brevet: **04.10.2006**
(21) Numéro de dépôt: 02760365.3
(22) Date de dépôt: 27.06.2002
(51) Int. Cl.: B01F 17/00, A01N 25/04

(54) **DISPERSION COMPRENANT UNE EMULSION DONT LA PHASE AQUEUSE EST DE FORCE IONIQUE ELEVEE**
EINE EMULSION, DEREN WÄSSERIGE PHASE EINE HOHE IONENSTÄRKE HAT, ENTHALTENDE DISPERSION
DISPERSION COMPRISING AN EMULSION HAVING AN AQUEOUS PHASE WITH HIGH IONIC STRENGTH

(30) Priorité: 27.06.2001 FR 0108744
(43) Date de publication de la demande: 24.03.2004
(73) Titulaire: RHODIA CHIMIE, 92512 Boulogne Billancourt Cedex (FR)
(72) Inventeur: MORVAN, Mikel, Princeton, NJ 08540 (US); SENECHAL, Alain, F-94220 Charenton (FR)
(74) Mandataire: Boittiaux, Vincent
(86) Numéro de dépôt international: PCT/FR2002/002239
(87) Numéro de publication internationale: WO 2003/002242

(56) Documents cités:
- EP-A- 0 007 731
- EP-A- 0 289 356
- EP-A- 0 302 701
- EP-A- 0 343 142
- EP-A- 0 374 796
- WO-A-01/16187
- WO-A-98/01478
- WO-A-99/03894
- US-A- 5 078 781
- US-A- 5 508 035

## Description

La présente invention a pour objet des dispersions comprenant une émulsion huile dans eau, telle que la force ionique de la phase aqueuse de l'émulsion est élevée, de même qu'un procédé de préparation de telles dispersions et leurs utilisations dans les domaines des formulations phytosanitaires.

Les dispersions, et notamment les émulsions, sont des moyens de plus en plus utilisés pour combiner des matières actives non miscibles entre elles, voire incompatibles. Dans ce cas de figure, on rencontre très souvent le cas où il faut stabiliser, sous la forme d'une émulsion, une matière active hydrophobe et une matière active hydrophile sous forme de sel soluble dans l'eau. Ce mode de mise en oeuvre ne pose pas de problème trop important lorsque les dispersions sont telles que la phase aqueuse est de force ionique relativement peu élevée. Mais la situation est tout autre lorsque la concentration en matière(s) active(s) devient très élevée dans cette phase, en d'autres termes lorsque la force ionique de la phase aqueuse est importante. Or il est important de pouvoir disposer de dispersions dont une concentration est élevée en matière(s) active(s), de manière à en augmenter l'efficacité (teneur plus importante, mélange de matières actives avec optimisation des ratios, entre autres). Ces dispersions sont destinées ensuite à être diluées par l'utilisateur, avant leur mise en oeuvre.

La difficulté est que lorsque l'on prépare des émulsions dont la force ionique de la phase aqueuse est importante, la majorité des tensioactifs classiquement utilisés pour la stabilisation des émulsions ne peuvent plus être utilisés, car ils deviennent insolubles dans de tels milieux. Il existe quelques tensioactifs qui peuvent stabiliser ce type d'émulsions, mais leur nombre est relativement restreint, et font partie, entre autres, de la famille des tensioactifs à tête sucre, comme par exemple les alkylpolyglucosides. Malgré tout, si ces tensioactifs sont en mesure de stabiliser les émulsions à force ionique élevée, leur utilisation n'est pas totalement satisfaisante. Effectivement, lors de la dilution des émulsions par l'utilisateur, apparaissent des zones d'instabilité (floculation, coalescence). Par conséquent, l'application de ces émulsions diluées reste inappropriée.

La présente invention a pour but de résoudre les problèmes mentionnés ci-dessus.

Ainsi, l'un des premiers objets de l'invention est donc constitué par une dispersion comprenant au moins une émulsion d'une phase organique dans une phase aqueuse ; la phase aqueuse comprenant une teneur en sel soluble d'au moins 1 mol/l, caractérisée en ce que la phase aqueuse comprend au moins un copolymère à blocs amphiphile, comprenant au moins un bloc hydrophile, choisi parmi les copolymères :
(i) qui ne font pas apparaître de séparation macroscopique de phases en solution à 1 % poids, dans un mélange eau et KBr ; la concentration en KBr étant identique à celle en sel soluble de la dispersion, à 20°C ;
(ii) dont le rapport massique bloc(s) hydrophile(s) / bloc(s) hydrophobe(s) est compris entre 40/60 et 95/5.

Un deuxième objet de l'invention consiste en un procédé d'obtention d'une dispersion consistant à préparer une solution aqueuse de copolymère et de sel soluble, à laquelle on ajoute la phase organique comprenant éventuellement une matière active.

Un autre objet de l'invention a trait à l'utilisation de telles dispersions dans les domaines des formulations phytosanitaires.

La présente invention apporte une solution satisfaisante à la question de la stabilisation d'émulsion de force ionique élevée. En effet, il est possible d'obtenir des dispersions, notamment des émulsions, concentrées stables.

En outre les dispersions selon l'invention conservent cette propriété de stabilité lors de leur dilution, préalablement à leur application.

Mais d'autres avantages et caractéristiques de la présente invention apparaîtront plus clairement à la lecture de la description et des exemples qui vont suivre.

Au sens de la présente invention, le mot "dispersion" désigne, selon les cas, des dispersions de plusieurs liquides non miscibles au moins en partie (émulsions) ou des dispersions de plusieurs liquides non miscibles au moins en partie et de particules solides (suspo-émulsions).

Ainsi que cela a été indiqué auparavant, l'invention a pour objet une dispersion comprenant au moins une émulsion d'une phase organique dans une phase aqueuse comprenant une teneur en sel soluble d'au moins 1 mol/l et comprenant au moins un copolymère à blocs amphiphile choisi parmi les copolymères :
(i) qui ne font pas apparaître de séparation macroscopique de phases en solution à 1% poids, dans un mélange eau et KBr avec une concentration en KBr identique à celle en sel soluble de la dispersion à 20°C ;
(ii) dont le rapport massique bloc(s) hydrophile(s) / bloc(s) hydrophobe(s) est compris entre 40/60 et 95/5.

Selon un mode de réalisation de l'invention, le copolymère mis en oeuvre comme stabilisant de l'émulsion est choisi parmi ceux dont le rapport massique bloc(s) hydrophile(s) / bloc(s) hydrophobe(s) est compris entre 50/50 et 90/10.

Plus particulièrement, le ou les blocs hydrophiles du copolymère peuvent être obtenus en mettant en oeuvre, comme monomère hydrophile, au moins un monomère hydrophile ionique ou potentiellement ionisable, plus particulièrement anionique ou cationique, et/ou au moins un monomère hydrophile non ionique. Précisons que les blocs du copolymère possédant des fonctions ionisables, peuvent se trouver sous une forme ionique ou non, selon le pH de la dispersion et le pK desdites fonctions.

De préférence, le pH de la dispersion est tel que les fonctions du copolymère se trouvent sous une forme au moins partiellement ionisée, voire totalement ionisée.

Parmi les monomères anioniques, susceptibles d'être mis en oeuvre pour l'obtention du ou des blocs hydrophiles, on peut citer ceux comprenant au moins une fonction carboxylique, sulfonique, sulfurique, phosphonique, phosphorique, sulfosuccinique, ou les sels correspondants.

Plus particulièrement, le ou les blocs hydrophiles anioniques du copolymère peuvent être obtenus à partir d'au moins un monomère choisi parmi :
- les acides mono- ou poly- carboxyliques linéaires, ramifiés, cycliques ou aromatiques, les dérivés N-substitués de tels acides ; les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs précurseurs, leurs dérivés sulfoniques ou phosphoniques, ainsi que les macromonomères dérivant de tels monomères ; les monomères ou macromonomères pouvant être sous la forme de sels. Il est rappelé que le terme macromonomère désigne une macromolécule portant une ou plusieurs fonctions polymérisables.

A titre d'exemples de monomères susceptibles d'entrer dans la préparation du ou des blocs hydrophiles anioniques du copolymère, on peut citer sans intention de s'y limiter :
- l'acide acrylique, l'acide méthacrylique, l'acide fumarique, l'acide itaconique, l'acide citraconique, l'acide maléique, l'acide acrylamido glycolique, l'acide 2-propène 1-sulfonique, l'acide méthallyl sulfonique, l'acide styrène sulfonique, l'acide α-acrylamido méthylpropane sulfonique, le 2-sulfoéthylène méthacylate, l'acide sulfopropyl acrylique, l'acide bis-sulfopropyl acrylique, l'acide bis-sulfopropyl méthacrylique, l'acide sulfatoéthyl méthacrylique, le monoester phosphate d'acide hydroxyéthyl méthacrylique, ainsi que les sels de métal alcalin, comme le sodium, le potassium, ou d'ammonium ;
- l'acide vinyl sulfonique, l'acide vinylbenzène sulfonique, l'acide vinyl phosphonique, l'acide vinylidène phosphorique, l'acide vinyl benzoïque, ainsi que les sels de métal alcalin, comme le sodium, le potassium, ou d'ammonium ;
- le N-méthacryloyl alanine, le N-acryloyl-hydroxy-glycine ;
seuls ou en mélanges, ainsi que les macromonomères dérivant de tels monomères.

Il est à noter, comme indiqué auparavant, que l'on ne sortirait pas du cadre de la présente invention en mettant en oeuvre des monomères précurseurs de ceux qui viennent d'être cités. En d'autres termes, ces monomères présentent des motifs qui, une fois incorporés dans la chaîne polymère, peuvent être transformés, notamment par un traitement chimique tel que l'hydrolyse, pour redonner les espèces anioniques précitées. Par exemple, les monomères totalement ou partiellement estérifiés des monomères précités peuvent être mis en oeuvre pour être, par la suite, hydrolysés totalement ou en partie.

En ce qui concerne les monomères cationiques, susceptibles d'entrer dans la composition du ou des blocs hydrophiles, on peut citer entre autres :
- les (méth)acrylates d'aminoalkyle, les (méth)acrylamides d'aminoalkyle ;
- les monomères comprenant au moins une fonction amine secondaire, tertiaire ou quaternaire, ou un groupe hétérocyclique contenant un atome d'azote, la vinylamine, l'éthylène imine ;
- les sels d'ammonium de diallyldialkyl ;
seuls ou en mélanges, ou les sels correspondants ; ainsi que les macromonomères dérivant de tels monomères.

Ainsi, lorsque les monomères se trouvent sous forme de sels (plus particulièrement avec des fonctions amines quaternisées), de type ammonium NR₄⁺ avec R, identiques ou non, représentant un atome d'hydrogène, un radical alkyle comprenant 1 à 10 atomes de carbone, de préférence 1 à 4, éventuellement porteur d'un radical hydroxyle, le contre-ion peut être choisi parmi les halogénures comme par exemple le chlore, les sulfates, les hydrosulfates, les alkylsulfates (par exemple comprenant 1 à 6 atomes de carbone), les phosphates, les citrates, les formates, les acétates.

A titre d'exemples de monomères cationiques convenables figurent les monomères suivants :
- le diméthyl amino éthyl (méth)acrylate, le diméthyl amino propyl (méth)acrylate, le ditertiobutyl aminoéthyl (méth)acrylate, le diméthyl amino méthyl (méth)acrylamide, le diméthyl amino propyl (méth)acrylamide ;
- l'éthylène imine, la vinylamine, la 2-vinylpyridine, la 4-vinylpyridine ;
- le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle ;
- le chlorure d'ammonium de diallyldiméthyl ;
seuls ou en mélanges, ou leurs sels correspondants, ainsi que les macromonomères dérivant de tels monomères.

En ce qui concerne les monomères hydrophiles non ioniques que l'on peut utiliser pour la préparation de blocs hydrophiles, on peut citer entre autres l'oxyde d'éthylène ; les amides des acides mono- ou poly- carboxyliques, linéaires, ramifiés, cycliques ou aromatiques, comprenant au moins une insaturation éthylénique ou dérivés, comme le (méth)acrylamide, le N-méthylol (méth)acrylamide ; les amides cycliques de la vinylamine, tel que la N-vinylpyrrolidone ; les esters hydrophiles dérivant de l'acide (méth)acrylique comme par exemple le (méth)acrylate de 2-hydroxyéthyle ; les esters vinyliques permettant d'obtenir des blocs alcool polyvinylique après hydrolyse, comme l'acétate de vinyle, le Versatate® de vinyle, le propionate de vinyle ; les monomères N-vinyliques comme la N-vinylcaprolactone, le N-vinylcaprolactame, le N-vinylacétamide ; les monomères éthyléniques comprenant un groupe uréido tels que l'éthylène urée éthyl (méth)acrylamide, ou l'éthylène urée éthyl (méth)acrylate ; les monomères du type des sucres comme les osides, les polyholosides fortement dépolymérisés, seuls, en combinaison, ainsi que les macromonomères dérivant de tels monomères.

Par fortement polyholosides dépolymérisés, on entend des polyholosides dont la masse moléculaire en poids est plus particulièrement inférieure à 20000 g/mole.

Les osides sont des composés qui résultent de la condensation, avec élimination d'eau, de molécules d'oses entre elles ou encore de molécules d'oses avec des molécules non glucidiques. Parmi les osides on préfère les holosides qui sont formés par la réunion de motifs exclusivement glucidiques et plus particulièrement les oligoholosides (ou oligosaccharides) qui ne comportent qu'un nombre restreint de ces motifs, c'est-à-dire un nombre en général inférieur ou égal à 10. A titre d'exemples d'oligoholosides on peut mentionner le saccharose, le lactose, la cellobiose, le maltose.

Les polyholosides (ou polysaccharides) fortement dépolymérisés convenables sont décrits par exemple dans l'ouvrage de P. ARNAUD intitulé "cours de chimie organique", GAUTHIER-VILLARS éditeurs, 1987. A titre d'exemple non limitatif de polyholosides fortement dépolymérisés, on peut citer le dextran, l'amidon.

De tels monomères peuvent être utilisés seuls ou en mélanges, ainsi que sous la forme de macromonomères.

Toutefois les monomères hydrophiles préférés, ioniques ou non, entrant dans la compositions des blocs hydrophiles des copolymères, sont plus particulièrement choisis parmi l'acide acrylique ou ses sels, l'acrylamide, l'acide 2-acrylamido-2-méthylpropanesulfonique ou ses sels, et l'acide styrène sulfonique ou ses sels, le chlorure de triméthyl ammonium de vinylbenzyle, seuls ou en mélanges, ou sous la forme de macromonomères.

A titre d'illustration de monomères hydrophobes utilisables pour préparer le ou les blocs hydrophobes, on peut citer notamment :
- les esters des acides mono- ou poly- carboxyliques, linéaires, ramifiés, cycliques ou aromatiques, comprenant au moins une insaturation éthylénique,
- les nitriles αβ-éthyléniquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique,
seuls ou en mélanges, ainsi que les macromonomères dérivant de tels monomères.

A titre d'exemples particuliers de monomères utilisables dans d'entrer dans la préparation du ou des blocs hydrophobes des copolymères, on peut citer :
- les esters d'acide (méth)acrylique avec un alcool comprenant 1 à 12 atomes de carbone comme le (méth)acrylate de méthyle, le (méth)acrylate d'éthyle, le (méth)acrylate de propyle, le (méth)acrylate de n-butyle, le (méth)acrylate de t-butyle, le (méth)acrylate d'isobutyle, l'acrylate de 2-éthylhexyl ;
- l'acétate de vinyle, le Versatate® de vinyle, le propionate de vinyle, le chlorure de vinyle, le chlorure de vinylidène, le méthyl vinyléther, l'éthyl vinyléther ;
- les nitriles vinyliques incluent plus particulièrement ceux ayant de 3 à 12 atomes de carbone, comme en particulier l'acrylonitrile et le méthacrylonitrile ;
- le styrène, l'α-méthylstyrène, le vinyltoluène, le paraméthylstyrène, le paratertiobutylstyrène, le butadiène, le chloroprène, l'isoprène ;
seuls ou en mélanges, ainsi que les macromonomères dérivant de tels monomères.

Les monomères préférés sont les esters de l'acide acryliques avec les alcools linéaires ou ramifiés en C₁-C₄ tels que l'acrylate de méthyle, d'éthyle, de propyle et de butyle, les esters vinyliques comme l'acétate de vinyle, le styrène, l'α-méthylstyrène.

Il est à noter que l'un au moins des blocs hydrophiles peut être constitué par un ou plusieurs monomères hydrophiles ou bien encore par un mélange de monomère(s) hydrophile(s) et hydrophobe(s) ; la proportion pondérale en monomère(s) hydrophobe(s) représentant plus particulièrement moins de 50 % des monomères formant ledit bloc hydrophile, de préférence moins de 20 %. Dans le cas de mélange de monomères de différentes natures, les monomères sont plus particulièrement combinés soit en un mélange de monomères hydrophiles non ioniques et/ou anioniques et de monomères hydrophobes, soit de monomères hydrophiles non ioniques et/ou cationiques et de monomères hydrophobes. Il est à noter de plus que lorsque les blocs comprennent un mélange de monomères, ces derniers sont répartis de manière statistique au sein dudit bloc.

La même remarque peut être faite pour les blocs hydrophobes.

Ainsi, au moins l'un des blocs hydrophobes peut être constitué par un ou plusieurs monomères hydrophobes ou bien encore par un mélange de monomère(s) hydrophobe(s) et hydrophile(s) ; la proportion massique en monomère(s) hydrophile(s) représentant plus particulièrement moins de 50 % en poids des monomères formant ledit bloc hydrophobe. Là encore, dans le cas de mélange de monomères de différentes natures, les monomères sont plus particulièrement combinés soit en un mélange de monomères hydrophiles non ioniques et/ou anioniques et de monomères hydrophobes, soit de monomères hydrophiles non ioniques et/ou cationiques et de monomères hydrophobes. Enfin, lorsque les blocs comprennent un mélange de monomères, ces derniers sont répartis de manière statistique au sein dudit bloc.

En outre, plus particulièrement, le copolymère est tel que la masse molaire en nombre de chaque bloc est comprise entre 500 et 100.10³ g/mol, de préférence entre 103 et 50.10³ g/mol.

Il est précisé que les masses molaires en poids indiquées ci-dessus sont des masses molaires théoriques, évaluées en fonction des quantités respectives des monomères et d'agent de contrôle, introduites lors de la préparation desdits polymères.

Les copolymères utilisables comme stabilisant sont de manière avantageuse des copolymères sous forme linéaire.

Les copolymères mis en oeuvre sont des copolymères à blocs, et de préférence des diblocs.

Ces copolymères sont des composés bien connus de l'homme de l'art et peuvent être obtenus par polymérisation ionique ou, de préférence, radicalaire dite vivante ou contrôlée impliquant l'utilisation d'un agent de contrôle en vue du contrôle de ladite polymérisation radicalaire.

La mise en oeuvre de polymérisation radicalaire vivante présente l'avantage de contrôler la composition de chacun des blocs ainsi que leur stéréorégularité (en cas de blocs comprenant des monomères de nature différente).

En ce qui concerne les procédés de polymérisation dite vivante ou contrôlée, on pourra notamment se référer aux :
- procédés des demandes WO 98/58974, WO 00/75207 et WO 01/42312 qui mettent en oeuvre une polymérisation radicalaire contrôlée par des agents de contrôle de type xanthates,
- procédé de polymérisation radicalaire contrôlée par des agents de contrôles de type dithioesters de la demande WO 98/01478,
- procédé de la demande WO 99/03894 qui met en oeuvre une polymérisation en présence de précurseurs nitroxydes,
- procédé de polymérisation radicalaire contrôlée par des agents de contrôle de type dithiocarbamates de la demande WO 99/31144,
- procédé de polymérisation radicalaire contrôlée par des agents de contrôle de type dithiocarbazates de la demande WO 02/26836.
- procédé de polymérisation radicalaire contrôlée par des agents de contrôle de type dithiophosphoroesters de la demande WO 02/10223,
- procédé de la demande WO 96/30421 qui utilise une polymérisation radicalaire par transfert d'atome (ATRP),
- procédé de polymérisation radicalaire contrôlée par des agents de contrôle de type iniferters selon l'enseignement de Otu et al., Makromol. Chem. Rapid. Commun., 3, 127 (1982),
- procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- procédé de polymérisation radicalaire contrôlée par les dérivés du tetraphényléthane, divulgué par D. Braun et al. Dans Macromol. Symp. 111,63 (1996), ou encore,
- procédé de polymérisation radicalaire contrôlée par des complexes organocobalt décrit par Wayland et al. Dans J.Am.Chem.Soc. 116,7973 (1994).

Les agents de contrôle préférés pour mettre en oeuvre le procédé de polymérisation contrôlée sont choisis parmi les dithioesters, dithiocarbamates, et mieux encore, parmi les xanthates.

Le procédé consiste à effectuer :
(a) dans une première étape, on met en contact au moins un monomère éthyléniquement insaturé, au moins une source de radicaux libres, et au moins un agent de contrôle, puis
(b) dans une deuxième étape, on met en contact au moins un monomère éthyléniquement insaturé différent de celui ou ceux mis en oeuvre lors de l'étape précédente, avec le polymère issu de l'étape (a).

Selon un mode de réalisation particulièrement avantageux, l'agent de contrôle de l'étape (a) correspond à la formule suivante : 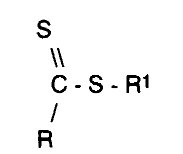 dans laquelle:
. R représente un groupe R²O-, R2R'²N- ou R³- avec :
   R² et R^{'2}, identiques ou différents, représentant un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
   R³ représentant H, Cl, un groupe alkyle, aryle, alcène ou alcyne, un (hétéro)cycle saturé ou non, éventuellement substitués, un groupe alkylthio, alcoxycarbonyle, aryloxycarbonyle, carboxy, acyloxy, carbamoyles, cyano, dialkyl- ou diaryl-phosphonato, dialkyl- ou diaryl-phosphinato, une chaîne polymère,
. R¹ représente un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, ou une chaîne polymère.

Les groupes R¹, R², R'² et R³ peuvent être substitués par des groupes alkyles, phényles substitués, des groupes aromatiques substitués ou des groupes: oxo, alcoxycarbonyle ou aryloxycarbonyle (-COOR), carboxy (-COOH), acyloxy (-O₂CR), carbamoyle (-CONR²), cyano (-CN), alkylcarbonyle, alkylarylcarbonyle, arylcarbonyle, arylalkylcarbonyle, isocyanato, phtalimido, maleïmido, succinimido, amidino, guanidino, hydroxy (-OH), amino (-NR2), halogène, allyle, époxy, alcoxy (-OR), S-alkyle, S-aryle, silyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R représentant un groupe alkyle ou aryle.

De préférence, l'agent de contrôle de formule (I) est un xanthate choisi parmi les composés de formules (A), (B) et (C) suivantes: 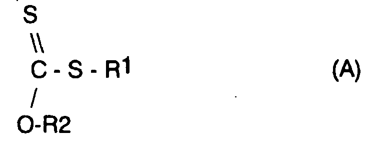 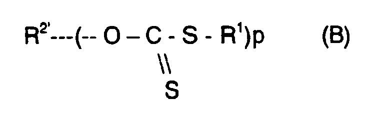 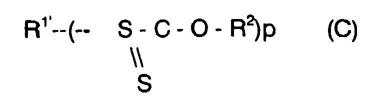 dans lesquelles :
- R² et R^{2'} représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
- R¹ et R^{1'} représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
- p est compris entre 2 et 10.

Au cours de l'étape (a), un premier bloc du polymère est synthétisé de nature hydrophile ou hydrophobe selon la nature et la quantité des monomères utilisés. Au cours de l'étape (b), l'autre bloc du polymère est synthétisé.

Les monomères sont utilisés dans les proportions adaptées pour obtenir un copolymère à blocs présentant les caractéristiques mentionnées auparavant, à savoir au moins le caractère soluble dans les milieux aqueux de force ionique élevée, ainsi que le rapport massique des blocs hydrophile(s) / hydrophobe(s).

Il est à noter que si les polymérisations successives sont réalisées dans le même réacteur, il est généralement préférable que tous les monomères utilisés lors d'une étape aient été consommés avant que la polymérisation de l'étape suivante ne commence, donc avant que les nouveaux monomères ne soient introduits. Toutefois, il peut arriver que les monomères hydrophobes ou hydrophiles de l'étape précédente soient encore présents dans le réacteur lors de la polymérisation du bloc suivant. Dans ce cas, ces monomères ne représentent généralement pas plus de 5 % en mole de tous les monomères et ils participent à la polymérisation suivante en contribuant à introduire des motifs hydrophobes ou hydrophiles dans le bloc suivant.

De manière avantageuse la polymérisation peut être mise en oeuvre dans un milieu aqueux et/ou solvant organique tel que le tétrahydrofurane ou un alcool aliphatique en C₁-C₈linéaire cyclique ou ramifié tel que le méthanol, l'éthanol, ou le cyclohexanol, ou un diol tel que l'éthylèneglycol. Un alcool, ou un mélange eau/ alcool est plus particulièrement recommandé dans le cas ou les monomères hydrophiles sont l'acide acrylique, l'acrylamide, l'acide 2-acrylamido-2-méthyl-propanesulfonique, et le sulfonate de styrène et les monomères hydrophobes sont l'acrylate de n-butyle, l'acrylate d'isobutyle, l'acrylate de 2-éthylhexyle, l'acrylate de t-butyle.

A la fin de l'étape de polymérisation contrôlée, l'agent de contrôle localisé à une des extrémités de chaîne du polymère, peut être rendu inerte si souhaité pour l'utilisation finale du copolymère. Il est possible que la nature du milieu réactionnel de polymérisation (par exemple conditions de pH, nature des constituants du milieu réactionnel, monomères à polymériser), soit suffisant en soi pour inactiver l'agent de contrôle en fin de polymérisation. Il est également possible que le milieu à traiter lors de l'utilisation du finale du copolymère, inactive ou neutralise de façon inhérente l'agent de contrôle. On recommande, si cela est nécessaire pour certaines applications, de masquer les fonctions chimiques actives dudit agent au moyen d'un agent masquant chimique approprié, ou de détruire l'agent de contrôle par une réaction d'hydrolyse, d'oxydation par catalyse métallique. Dans le cas du xanthate comme agent de contrôle, on recommande de le rendre inerte, si nécessaire, par un traitement du copolymère formé au moyen d'un traitement thermique par exemple dans l'intervalle de température 80 à 180°C en présence d'un alcanolamine tel que la triéthanolamine.

Le mode de préparation qui vient d'être détaillé, ainsi que les copolymères résultants ont été décrits dans la demande internationale PCT/FR02/01349 du 19/04/02.

La teneur en copolymère dans la dispersion selon l'invention représente plus particulièrement au moins 1 % en poids par rapport à la phase organique, de manière avantageuse de 2 à 20 % en poids par rapport à la phase organique, et de préférence entre 2 et 10 % en poids par rapport à la phase organique.

Ainsi que cela a été décrit auparavant, la phase aqueuse de la dispersion comprend au moins un sel soluble dans l'eau dont la concentration est d'au moins 1 mol/l.

Selon un mode de réalisation particulier de l'invention, la concentration en sel soluble dans la phase aqueuse est supérieure ou égale à 1,7 mol/l, et de manière préférée supérieure ou égale à 2 mol/l.

Tout sel organique ou minéral peut entrer dans la composition de la dispersion dès l'instant qu'il forme, à 20°C, une solution dans l'eau, avec une concentration entrant dans les gammes mentionnées ci-dessus.

Selon un mode de réalisation préféré de l'invention, lesdits sels solubles sont des substances actives dans le domaine d'application de la dispersion selon l'invention.

Ainsi, dans le domaine des formulations phytosanitaires, on peut citer entre autres, les pesticides hydrophiles, et plus spécialement les herbicides, mais aussi les éléments nutritifs hydrophiles favorisant la croissance et le développement des plantes.

Parmi les matières actives convenables, on peut notamment citer les matières actives herbicides suivantes sous la forme de sels organiques ou inorganiques : les dérivés aminophosphates ou aminophosphonates, Acifluorfen, Asulam, Bentazon, Bialaphos, Bispyribac, Bromacil, Bromoxynil, Chloramben, Clopyralid, 2,4-D, 2,4-Db, Dalapon, Dicamba, Dichlorprop, Difenzoquat, Diquat, Endothall, Fenac, Fomesafen, Fosamine, loxynil, MCPA, MCPB, Mecoprop, Methylarsonic Acid, Naptalam, Paraquat, Picloram, Sulfamic Acid, seuls ou en mélange.

On ne sortirait pas du cadre de la présente invention en combinant une ou plusieurs des matières actives précitées.

De préférence, la matière active est choisie parmi les dérivés aminophosphates ou aminophosphonates, sous la forme de sels organiques ou inorganiques comme le glyphosate, le sulphosate, le glufosinate, sous la forme de sels organiques ou inorganiques.

Par glyphosate, on désigne plus particulièrement la N-phosphonométhylglycine ainsi que tout dérivé de celle-ci conduisant en solution aqueuse à des anions glyphosate.

A titre de sels convenables, on peut plus particulièrement citer les sels de métaux alcalins comme le sodium ou le potassium ; les sels d'ammonium, de type N(R)₄⁺ pour lequel les radicaux R, identiques ou différents, représentent un atome d'hydrogène ou un radical hydrocarboné en C₁-C₆, linéaire ou non, saturé ou non, éventuellement substitué par un groupement hydroxyle ; ou encore les sels de sulfonium ; lesdits sels étant présents seuls ou en combinaison.

Parmi les sels d'ammonium on peut citer tout particulièrement, les amines secondaires ou primaires comme l'isopropylamine, la diméthylamine ou les diamines comme l'éthylènediamine. Quant aux sels de sulfonium, le triméthylsulfonium convient parfaitement.

En tant que dérivés préférés du glyphosate on peut citer notamment le sel d'isopropylamine et le sel de triméthylsulfonium.

En ce qui concerne les éléments nutritifs, il s'agit de préférence de sels métalliques comme les sels de zinc, de fer, et de préférence de manganèse. Ces sels sont utilisés sous forme de chélates de type E.D.T.A. par exemple ou de sulfates. Au cas où les éléments nutritifs sont des métaux multivalents, il est préférable que les blocs hydrophiles du copolymère ne soient pas obtenus à partir de monomères cationiques.

Selon une variante de la présente invention, la dispersion peut comprendre un solide dispersé dans la phase aqueuse de cette dernière.

Avantageusement, si un tel solide est présent, il est choisi parmi les composés actifs.

Parmi les matières actives solides susceptibles d'entrer dans la composition de la dispersion selon l'invention, on peut citer entre autres, les composés de la famille des triazines, comme atrazine, ametryn, cyanazine, simazine, terbuthylazine, ou leurs mélanges.

Par ailleurs, de préférence, la taille moyenne en nombre des particules solides, est comprise entre 0,3 et 10 µm, de manière avantageuse entre 0,5 et 2 µm.

La phase organique de l'émulsion est choisie parmi les composés organiques qui se trouvent sous une forme liquide à la température de préparation de la dispersion selon l'invention, ou bien encore parmi ceux qui se trouvent liquides à la température d'utilisation de ladite dispersion, voire ces deux possibilités simultanément.

A titre d'exemples de phases organiques convenables à la préparation de la dispersion selon l'invention, on peut citer par exemple les huiles, les cires ou les graisses organiques d'origine végétale ou animale ; les huiles ou cires minérales ; les acides gras, saturés ou non ; les esters de tels acides ; les alcools gras, saturés ou non ; les solvants hydrocarbonés aliphatiques ou aromatiques ; les coupes pétrolières ; seuls ou en mélange.

Comme huiles organiques d'origine animale, on peut citer en autres, l'huile de cachalot, l'huile de baleine, l'huile de phoque, l'huile de sardine, l'huile de hareng, l'huile de squale, l'huile de foie de morue ; les graisses de porc, de mouton (suifs).

En tant que cires d'origine animale, on peut citer la cire d'abeille.

A titres d'exemples d'huiles organiques d'origine végétale, on peut mentionner, entre autres, l'huile de colza, l'huile de tournesol, l'huile d'arachide, l'huile d'olive, l'huile de noix, l'huile de maïs, l'huile de soja, l'huile de lin, l'huile de chanvre, l'huile de pépins de raisin, l'huile de coprah, l'huile de palme, l'huile de graines de coton, l'huile de jojoba, l'huile de sésame, l'huile de ricin.

En tant que cires d'origine végétale, on peut citer la cire de carnauba.

En ce qui concerne les huiles minérales, on peut citer entre autres les huiles naphténiques, paraffiniques (vaseline). Les cires paraffiniques, isoparaffiniques, peuvent de même convenir en tant que phase organique de l'émulsion.

Les produits issus de l'alcoolyse des huiles précitées, peuvent aussi être utilisés.

On ne sortirait du cadre de la présente invention en mettant en oeuvre, en tant que phase organique, au moins un acide gras, saturé ou non, au moins un ester d'acide gras, saturé ou non, et d'alcool comprenant 1 à 6 atomes de carbone, au moins un alcool gras, saturé ou non, ou leurs mélanges.

Plus particulièrement, lesdits acides, esters ou alcools comprennent 10 à 40 atomes de carbone, plus particulièrement 18 à 40 atomes de carbone, et peuvent comprendre une ou plusieurs insaturations éthyléniques, conjuguées ou non. Par ailleurs, les acides, esters ou alcools, peuvent comprendre un ou plusieurs groupements hydroxyles.

Comme exemples d'acides gras saturés, on peut citer les acides palmitique, stéarique, béhénique.

Comme exemples d'acides gras insaturés, on peut citer les acides myristoléique, palmitoléique, oléique, érucique, linoléique, linolénique, arachidonique, ricinoléique, ainsi que leurs mélanges.

Comme esters d'acides gras, on peut citer les esters des acides précédemment listés, pour lesquels la partie dérivant de l'alcool comprend 1 à 6 atomes de carbone, comme les esters de méthyle, d'éthyle, de propyle, d'isopropyle, etc.

Comme exemple d'alcools, on peut citer ceux correspondants aux acides précités.

La phase organique peut de même être choisie parmi les mono-, di- et triglycérides.

Parmi les solvants hydrocarbonés aliphatiques ou aromatiques ; les coupes pétrolières, on peut citer le xylène, le Solvesso®.

La phase organique peut comprendre une ou plusieurs matières actives, ou même constituer une matière active en elle-même.

Par ailleurs, la matière active peut se trouver sous une forme soluble dans la phase organique ou bien solubilisée dans cette même phase.

Dans ce cas, un tiers solvant est présent, choisi parmi les composés solubilisant la matière active mais aussi parmi ceux solubles dans la phase organique de la dispersion.

A titre d'exemple de solvants de ce type, on peut citer les cétones, comme la cyclohexanone, l'isophorone, les lactones, comme la butyrolactone, les pyrolidones, comme la N-vinylpyrolidone, lesdits solvants étant seuls ou en mélange,

Notons que la teneur en ces tiers solvants dans la dispersion reste telle que la matière active soluble dans la phase organique reste soluble dans la phase organique et non dans la phase aqueuse de la dispersion.

A titre d'exemple de matières actives solubles ou solubilisées dans la phase organique, et utilisables dans le domaine des formulations phytosanitaires, on peut citer par exemple les matières actives choisies parmi la famille des α-cyano-phénoxybenzyl carboxylates ou des α-cyano-halogénophénoxy-carboxylates, la famille des N-méthylcarbonates comprenant des substituants aromatiques, les matières actives telles que Azinphos-methyl, Benfluralin, Bifenthrin, Chlorphoxim, Chlorpyrifos, Fluchloralin, Fluroxypyr, Dichloruos, Malathion, Molinate, Parathion, Permethrin, Profenofos, Propiconazole, Prothiofos, Pyrifenox, Butachlor, Metolachlor, Chlorimephos, Diazinon, Fluazifop-P-butyl, Heptopargil, Mecarbam, Propargite, Prosulfocarb, Bromophos-ethyl, Carbophenothion, Cyhalothrin, Imazameth, Imazamethabenz, Imazamox, Imazapic, Imazapyr, Imazaquin, Amzethapyr, ou leurs mélanges.

Selon un mode de réalisation particulier de l'invention, la proportion pondérale de phase organique dans la dispersion représente 5 à 50 % en poids, de préférence 10 à 30 % en poids.

Selon une variante de l'invention, la dispersion peut comprendre au moins un tensioactif. De préférence, le ou les tensioactifs sont choisis parmi ceux qui sont solubles dans la phase aqueuse présentant une force ionique importante, c'est-à-dire une force ionique correspondant à une concentration en sel soluble d'au moins 1 mol/l et de manière encore plus préférée, supérieure ou égale à 2 mol/l.

Ledit tensioactif peut être choisi parmi les tensioactifs anioniques ou non ioniques.

Selon un mode de réalisation de la présente invention, le tensioactif est choisi parmi les alkylpolyglucosides.

Ces tensioactifs sont bien connus de l'homme du métier. Ce sont plus précisément des tensioactifs, oligomériques, non ioniques, qui se trouvent sous la forme d'acétals d'alcools gras (de préférence en C₈-C₁₆) et de sucres (glucose). Ils sont notamment obtenus par réaction chimique à partir d'amidon, de graisses. De tels tensioactifs sont par exemple commercialisés par la société Henkel sous les dénominations Plantaren®.

On a en effet remarqué qu'il existait, d'une manière totalement inattendue, une synergie entre les tensioactifs de ce type avec les copolymères entrant dans la composition des dispersions selon l'invention.

Ainsi, lorsque la teneur en tensioactif alkypolyglucoside représente au maximum 50 % en poids, du poids de l'ensemble tensioactif / copolymère, on a constaté d'une part que l'on pouvait obtenir des émulsions stables non seulement à l'état concentré mais aussi après dilution. Or ceci n'est pas possible avec les alkylpolyglucosides seuls, toutes choses étant égales par ailleurs.

De plus, on a remarqué qu'en mettant en oeuvre les mêmes moyens pour la préparation de la dispersion, plus particulièrement l'émulsion, et notamment les mêmes moyens énergétiques, on obtenait une émulsion dont la taille moyenne des gouttelettes était plus faible que celle d'émulsions obtenues à partir de l'un ou l'autre desdits composés. Par conséquent, la stabilité de l'émulsion en est d'autant améliorée.

La dispersion selon l'invention (émulsion) présente plus particulièrement une taille moyenne de gouttelettes comprise entre 0,3 et 10 µm, de préférence entre 0,5 et 2 µm (exprimée par rapport au volume de particules ; mesurée au moyen d'un granulomètre à diffraction laser de type HORIBA).

La dispersion selon l'invention peut en outre comprendre des additifs classiques dans le domaine.

Ainsi, il peut être avantageux dans certains cas, d'ajouter un activateur biologique à la dispersion. Plus particulièrement, l'un des rôles de ce type d'additif est d'augmenter l'efficacité de certaines des matières actives présentes dans la dispersion.

De préférence, les activateurs biologiques sont présents dans la phase aqueuse de la dispersion et sont destinés à activer l'efficacité de la ou des matières actives sous forme de sel soluble dans l'eau.

L'homme de l'art connaît les matières actives pour lesquelles il peut être préférable d'ajouter de tels activateurs biologiques, de même que la nature de ces derniers. Cependant, à titre d'exemples d'activateurs biologiques, dans le cas particulier des aminophosphates, et tout spécialement du glyphosate, on peut citer notamment les amines grasses polyalcoxylées et notamment polyéthoxylées ; les amidoamines polyalcoxylées (par exemple polyéthoxylées ou polyéthoxylées / polypropoxylées). Conviennent aussi les mono- et diesters phosphates polyalcoxylés (par exemple polyéthoxylés ou polyéthoxylés / polypropoxylés) d'alcools hydrocarbonés aliphatiques, linéaires ou non, saturés ou non, comprenant 4 à 30 atomes de carbone, ou d'alcools aromatiques (plus particulièrement ceux pour lesquels le noyau aromatique comprend 6 atomes de carbone) comprenant éventuellement un ou plusieurs substituants sur le noyau aromatique, choisis parmi les radicaux alkyle, alcényle, comprenant jusqu'à 30 atomes de carbone, ou choisi parmi les radicaux alkylaryle pour lesquels la partie alkyle, linéaire ou non, comprend 1 à 10 atomes de carbone et la partie aryle comprend 6 atomes de carbone ; le contre-ion est plus particulièrement choisi parmi les métaux alcalins, comme le sodium, le potassium, les ions ammonium de type NR₄⁺ avec R, identiques ou non, représentant un atome d'hydrogène, un radical alkyle comprenant 1 à 10 atomes de carbone, de préférence 1 à 4, éventuellement porteur d'un radical hydroxyle. Parmi les activateurs biologiques envisageables, on peut encore mentionner des sels minéraux solubles dans la phase aqueuse, comme par exemple les sels de métaux alcalins, comme le sodium, le potassium, ou d'ammonium choisis parmi les carbonates ; les bicarbonates ; les halogénures, tels que les chlorures, les fluorures ; les nitrates, les phosphates ; les hydrogénophosphates ; les sulfates ; les bisulfates ; les bisulfites, seuls ou en mélange. Les activateurs qui viennent d'être mentionnés peuvent être utilisés seuls ou en mélanges.

Lorsque la dispersion selon l'invention comprend ce type d'aditif, leur teneur peut représenter jusqu'à 40 % en poids de la ou des matières actives sous forme de sel soluble (en d'autres termes, de la ou des matières actives que l'on cherche à activer).

La dispersion selon l'invention peut en outre comprendre au moins un agent épaississant, comme par exemples des hydrocolloïdes tels que la gomme xanthane, les galactomannannes comme la guar, la caroube ; ou leurs mélanges.

Au cas où la dispersion comprend au moins un agent épaississant, la teneur totale en ce composé est en général comprise entre 0,5 et 2 % en poids de la dispersion.

La dispersion selon l'invention peut aussi comprendre, de manière avantageuse, au moins un agent biocide (par exemple : proxel, glokill, etc.). Si un tel composé est utilisé, sa teneur est habituellement inférieure ou égale à 0,5 % en poids de la dispersion, de préférence d'environ 0,1 % en poids.

Un agent anti-gel peut de même entrer dans la composition de la dispersion selon l'invention, comme l'éthylène glycol, le propylène glycol par exemple. Habituellement, la teneur en agent anti-gel, s'il est présent, est inférieure ou égale à 10 % en poids par rapport au poids de la dispersion ; de préférence comprise entre 2 et 10 % de la phase aqueuse de la dispersion.

A tire d'additif qu'il est possible d'utiliser dans les formulations phytosanitaires, on peut de même citer les agents anti-mousse. Parmi les composés classiques, figurent les silicones, les savons d'acides gras, tels que le stéarate d'aluminium par exemple.

Si de tels composés sont mis en oeuvre, ils représentent en général une teneur comprise entre 0,1 et 6 % en poids de la dispersion, de préférence environ 0,5 à 2 % en poids de la dispersion.

Selon une variante de la présente invention, la dispersion peut se trouver sous une forme sèche.

Par forme sèche, on entend plus précisément des compositions dont la teneur en eau résiduelle est telle que l'on obtienne des particules dont l'aspect est celui d'une poudre non collante, non pâteuse.

L'invention a de même pour objet un procédé de préparation d'une telle dispersion dans lequel on prépare une solution aqueuse de copolymère et de sel soluble, à laquelle on ajoute progressivement la phase organique comprenant éventuellement une matière active.

Dans le cas de dispersion comprenant un solide dispersé dans la phase aqueuse, ledit solide est de préférence ajouté à l'émulsion une fois celle-ci obtenue.

Il est à noter qu'il peut être approprié de procéder à une étape de pré-broyage du solide avant de l'introduire dans l'émulsion.

Dans le cas où la dispersion comprend des additifs, les additifs solubles dans la phase aqueuse sont ajoutés à celle-ci avant l'ajout de la phase organique ; les additifs solubles dans la phase organiques sont ajoutés à celle-ci avant que ladite phase organique ne soit ajoutée à la phase aqueuse.

Cette préparation est réalisée sous agitation. Il est à noter que les moyens mis en oeuvre tels que les appareils de type Ultra-Turrax sont appropriés.

La température de préparation de la dispersion peut varier dans de larges limites dès l'instant que la phase organique se trouve à l'état liquide lors de la préparation de l'émulsion. Mais de manière habituelle, la température de préparation de la dispersion est comprise entre 15 et 40°C.

La durée de l'agitation peut être déterminée sans difficulté par l'homme de l'art. L'un de ses critères peut par exemple être la durée nécessaire pour obtenir une émulsion dont la taille moyenne des gouttelettes est appropriée.

Dans le cas où la dispersion se trouve sous une forme sèche, on effectue une étape de séchage une fois la dispersion obtenue.

Dans ce cas de figure, il peut être avantageux d'ajouter à la dispersion une fois obtenue, une quantité supplémentaire de copolymère de manière à ce que la teneur totale de ce dernier, en poids sec, soit comprise entre 10 et 20 % en poids par rapport à la phase organique.

Selon un premier mode de réalisation de l'invention, on peut envisager un séchage en étuve. De préférence, ce séchage a lieu en couche mince.

Habituellement, la température de séchage est inférieure ou égale à 100°C. Plus particulièrement, des températures comprises entre 50 et 90°C conviennent à la mise en oeuvre de cette méthode.

Selon un autre mode de réalisation particulier de l'invention, on effectue le séchage de la dispersion par atomisation, par lyophilisation (congélation-sublimation), ou en utilisant un tambour Duprat®.

Ces modes de séchage, comme notamment le séchage par atomisation, sont particulièrement indiqués car ils permettent de conserver l'émulsion en l'état et d'obtenir directement des granulés.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence compris entre 100 et 115°C et la température de sortie est de préférence comprise entre 55 et 65°C. Ces températures sont données à titre indicatif, et dépendent de la stabilité thermique des divers éléments.

Dans le cas d'opérations de séchage de l'émulsion réalisées au moyen de tambour Duprat®, ou de tout moyen permettant d'obtenir rapidement un film sec qui est séparé du support séchant par une opération de raclage par exemple, on obtient des particules que l'on peut éventuellement broyer. Si nécessaire, ces particules peuvent faire l'objet d'une mise en oeuvre ultérieure, comme une étape d'agglomération, de manière à obtenir des granulés.

Enfin, la présente invention a pour objet l'utilisation dans le domaine des formulations phytosanitaires.

Des exemples concrets mais non limitatifs de l'invention vont maintenant être présentés.

### Exemples 1

Ces exemples ont pour objet l'obtention de polymères diblocs.

Dans ces exemples, les masses molaires en nombre ont été évaluées sur le monobloc (prépolymère) et sur le copolymère, par analyse GPC (éluant aqueux) après une hydrolyse à la soude. Les valeurs obtenues par GPC sont proches de celles attendues pour un monobloc et un copolymère à blocs, hydrolysés.

Les valeurs des masses molaires en nombre indiquées sont des valeurs théoriques calculées en fonction des quantités de monomère et d'agent de contrôle introduites. La polymérisation radicalaire contrôlée

### Exemple 1 a : synthèse de P1

### Polymère p(ABu)₂₀₀₀-b-p(AM)₃₀₀₀ avec rapport en poids p(ABu)/p(AM) : (40/60)

### A) Etape 1 : Synthèse du monobloc p(ABu)₂₀₀₀

| Composition du mélange réactionnel : | |
|---|---|
| Tétrahydrofurane | 30,00 g |
| Acrylate de Butyle | 16,00 g |
| S-éthylpropionyl O-éthyldithiocarbonate | 1,664 g |
| AIBN (Azo-bis-isobutyronitrile) | 0,263 g |

Les ingrédients ci-dessus sont chargés dans un réacteur de polymérisation de 250 ml muni d'un agitateur magnétique. La réaction est effectuée sous atmosphère d'azote sec pendant 20 minutes, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 30,2% en fin de réaction.

### B) Etape 2: Synthèse du dibloc p(ABu)₂₀₀₀-b-p(AM)₃₀₀₀

| Composition du mélange réactionnel: | |
|---|---|
| Tétrahydrofurane | 100,00 g. |
| Acrylamide | 24,00 g. |
| AIBN (Azo-bis-isobutyronitrile) | 0,263 g. |

Les ingrédients ci-dessus sont chargés dans un récipient sec sous atmosphère d'azote sec pendant 20 minutes, puis transférés dans le réacteur de polymérisation, comprenant le polymère issu de l'étape précédente (16 g), à l'aide d'une seringue à deux embouts. A la fin du transfert, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 30% en fin de réaction.

Le mélange réactionnel est laissé refroidir et les solvants sont éliminés à l'aide d'un évaporateur rotatif.

La masse molaire en nombre du copolymère est de 5 000 g/mol (valeur théorique).

### Exemple 1b : Synthèse de P2

### Polymère p(ABu)₁₀₀₀-b-P(AA)₄₀₀₀ avec rapport en poids p(ABu)/p(AA) : (20/80)

### A) Etape 1: Synthèse du monobloc p(ABu)₁₀₀₀

On reproduit exactement le mode opératoire de l'étape 1) de l'exemple 1a avec la composition du mélange réactionnel suivante :

| | |
|---|---|
| Ethanol | 23,00 g |
| Acrylate de butyle | 8,00 g |
| S-éthylpropionyl O-éthyldithiocarbonate | 1,664 g |
| AIBN (Azo-bis-isobutyronitrile) | 0,263 g. |

La teneur en solides est de 30,2% en fin de réaction.

### B) Etape 2: Synthèse du dibloc p(ABu)₁₀₀₀-b-p(AA)₄₀₀₀

On reproduit le mode opératoire de l'étape 2) de l'exemple 1a, à partir de 8 g du produit préparé précédemment dans l'étape 1, avec la composition suivante de mélange réactionnel :

| | |
|---|---|
| Ethanol | 93,00 g |
| Acide acrylique | 32,00 g |
| AIBN (Azo-bis-isobutyronitrile) | 0,263 g |

Le mélange réactionnel est laissé refroidir et les solvants sont éliminés à l'aide d'un évaporateur rotatif.

La teneur en solides est de 30 % en fin de réaction.

La masse molaire en nombre du copolymère est de 5 000 g/mol (valeur théorique).

### Exemple 1c : Synthèse de P3

### Polymère p(ABuh₂₀₀₀-b-p(A)₃₀₀₀ avec rapport en poids p(ABu)/p(AA) : (40/60)

### 1) Etape 1: Synthèse du monobloc p(ABu)₂₀₀₀

| Composition du mélange réactionnel : | |
|---|---|
| Ethanol | 39,50 g |
| Acrylate de butyle | 16,00 g |
| S-éthylpropionyl O-éthyldithiocarbonate | 1,664 g |
| AIBN (Azo-bis-isobutyronitrile) | 0,263 g |

Les ingrédients ci-dessus sont chargés dans un réacteur de polymérisation de 250 ml muni d'un agitateur magnétique.

La réaction est effectuée sous atmosphère d'azote sec pendant 20 minutes, le mélange réactionnel est ensuite chauffé à 60°C et maintenu à cette température pendant 20 heures.

De petites quantités d'échantillons de polymères sont prélevés de temps en temps pour contrôler la conversion.

La teneur en matière solide est de 30 %.

### 2) Etape 2: Synthèse du dibloc p(ABu)₂₀₀₀-b-p(AA)₃₀₀₀

Composition du mélange réactionnel, ajouté à 16 g de polymère précurseur obtenu à l'étape 1 précédente :

| | |
|---|---|
| Ethanol | 93,00 g pour 30% de solide au final |
| Acide acrylique | 24,00 g |
| AIBN (Azo-bis-isobutyronitrile) | 0,066 g |

Les ingrédients ci-dessus sont chargés dans un récipient sec sous atmosphère d'azote sec pendant 20 minutes, puis transférés dans le réacteur de polymérisation à l'aide d'une seringue à deux embouts.

A la fin du transfert, le mélange réactionnel est ensuite chauffé à 60°C et maintenu à cette température pendant 20 heures.

De petites quantités d'échantillons de polymères sont prélevés de temps en temps pour contrôler la conversion.

La teneur en matière solide est de 30%.

Le mélange réactionnel est laissé refroidir et les solvants sont pratiquement complètement éliminés à l'aide d'un évaporateur rotatif.

La masse moléculaire en nombre du copolymère est de 5 000 g/mol (valeur théorique).

### Exemple 1d : Synthèse de P4

### Polymère p(ABu)₇₅₀₀-b-p(AA)₇₅₀₀ avec rapport en poids p(ABu)/p(AA) : (50/50)

On introduit dans un réacteur muni d'un agitateur magnétique et d'une colonne à reflux, et comprenant 160 g d'acétone, le mélange suivant :

| | |
|---|---|
| S-éthylpropionyl O-éthyldithiocarbonate | 3,04 g |
| Isopropanol | 21,24 g |
| AIBN (Azo-bis-isobutyronitrile) | 0,82 g |

Le mélange est ensuite agité et maintenu à reflux à 70°C. On ajoute 66 g d'acide acrylique et 15g d'eau graduellement pendant 3 heures. Puis on ajoute 0,41 g d'azo bis-isobutyronitrile sont ajoutés après une heure d'addition puis encore 0,41 g d'azo bis-isobutyronitrile sont ajoutés après une seconde heure d'addition. Une fois l'addition d'acide acrylique terminée, on laisse la polymérisation se poursuivre pendant une heure.

La température est ensuite abaissée à 65°C par addition de 560 g d'acétone. Tout en maintenant la température à 65°C, on ajoute graduellement 140 g d'acrylate de butyle pendant 3 heures. On ajoute 0,40 g d'AIBN au commencement de l'addition de l'acrylate de butyle. On laisse la réaction se poursuivre pendant encore 3 heures.

Le mélange réactionnel est laissé refroidir et les solvants sont éliminés à l'aide d'un évaporateur rotatif. Le résidu obtenu est dispersé dans l'eau et lyophilisé.

La masse molaire en nombre du copolymère est de 15 000 g/mol (valeur théorique).

### Exemple 1g : Synthèse de P5

### Polymère p(ABu)₁₀₀₀-b-p (AM)₄₀₀₀ avec rapport en poids p(ABu)/p(AM) : (20/80)

### 1) Etape 1: Synthèse du monobloc p(ABu₀₀₀

On reproduit l'étape 1 de l'exemple 1 a, avec la composition suivante de mélange réactionnel:

| | |
|---|---|
| Tétrahydrofurane | 23,00 g |
| Acrylate de butyle | 8,00 g |
| S-éthylpropionyl O-éthyldithiocarbonate | 1,664 g |
| AIBN (Azo-bis-isobutyronitrile) | 0,263 g. |

La teneur en solides est de 30,2% en fin de réaction.

### 2) Etape 2: Synthèse du dibloc p(ABu)₁₀₀₀-b-p(AM)₄₀₀₀

On reproduit l'étape 2 de l'exemple 1a, avec la composition suivante de mélange réactionnel:

| | |
|---|---|
| Tétrahydrofurane | 93,00 g |
| Acrylamide | 32,00 g |
| AIBN (Azo-bis-isobutyronitrile) | 0,263 g |

La teneur en solides est de 30 % en fin de réaction

La masse moléculaire en nombre du copolymère est de 5 000 g/mol (valeur théorique).

### Exemple 2

Cet exemple a pour objet la préparation d'émulsion contenant 20% de phase organique (ester méthylique de colza, Phytorob 926-65 commercialisé par la société Novance) émulsionnée dans une phase aqueuse contenant 55% de sel d'isopropylammonium de glyphosate (soit 3 M en sel).

L'émulsion contient 2% d'un copolymère dibloc amphiphile ionique ou non ionique.

Tous les pourcentages sont donnés en poids.

### - Préparation de l'émulsion :

La quantité de copolymère requise, préalablement solubilisée à 20% en poids dans l'eau, est ajoutée à la solution de sel de glyphosate. La phase aqueuse obtenue est limpide ou légèrement trouble mais reste homogène, ne laissant pas apparaître de séparation macroscopique de phases au repos, à température ambiante.

La phase organique est ajoutée à cette phase aqueuse en 1 minute sous agitation mécanique avec un agitateur de type ULTRA TURRAX tournant à 8000 tr/mn. On poursuit ensuite l'agitation de l'émulsion obtenue pendant 2 minutes sous une vitesse de 16000 tr/mn.

### - Propriétés de l'émulsion (granulométrie) :

La granulométrie de l'émulsion ainsi obtenue est mesurée 24 heures et 1 mois après sa préparation à l'aide d'un granulomètre à diffraction laser de type HORIBA, et l'on évalue le diamètre médian.

Le diamètre médian (d50) signifie que 50 % des particules, en volume, ont une taille inférieure ou égale à la valeur dudit diamètre.

| **Polymère** | **Age de l'émulsion** | **Diamètre médian (µm)** |
|---|---|---|
| **P2** PABu-b-PAM | 24h | 1,0 |
| 2000-b-3000 | 1 mois | 1,0 |

| | | |
|---|---|---|
| PABu (polyacrylate de butyle) PAM (polyacrylamide) | | |

### Exemple 3

Cet exemple a pour objet des émulsions contenant 20% de phase organique (ester méthylique de colza) émulsionnée dans une phase aqueuse contenant 55% de sel d'isopropylammonium de glyphosate (soit 3 M en sel).

L'émulsion contient 1 ou 2% d'un copolymère diblocs PABu-PAA dont les rapports massiques sont différents. Tous les pourcentages sont donnés en poids.

### - Préparation de l'émulsion :

L'émulsion est préparée selon le même mode opératoire que celui décrit dans l'exemple 2.

### - Propriétés de l'émulsion (granulométrie) :

La granulométrie de l'émulsion ainsi obtenue est mesurée 24 heures et 1 mois après sa préparation à l'aide d'un granulomètre à diffraction laser de type HORIBA.

| **Polymère** | **Age de l'émulsion** | **Diamètre médian (µm)** |
|---|---|---|
| **P2** 2% PABu-b-PAA | 24h | 0,9 |
| 1000-b-4000 | 1 mois | 0,9 |
| **P3** 1% PABu-b-PAA | 24h | 1,0 |
| 2000-b-3000 | 1 mois | 1,2 |
| **P4** 2% PABu-b-PAA | 24h | 1,2 |
| 7500-b-7500 | 1 mois | 1,2 |

| | | |
|---|---|---|
| PAA (polyacide acrylique) | | |

### Exemple 4

Cet exemple a pour objet des émulsions contenant 20% de phase organique (ester méthylique de colza) émulsionnée dans une phase aqueuse contenant 46,5% de sel d'isopropylammonium de glyphosate (soit 2,5M en sel).

L'émulsion contient entre 0,25 et 2% d'un copolymère dibloc amphiphile ionique ou non ionique (entre 1,25 et 10% en poids par rapport à la phase organique). Tous les pourcentages sont donnés en poids.

### - Préparation de l'émulsion:

La quantité de polymère requise, préalablement solubilisée à 20% en poids dans l'eau, est ajoutée à la solution de sel de glyphosate à la concentration requise.

La phase aqueuse obtenue est limpide ou légèrement trouble mais reste homogène, ne laissant pas apparaître de séparation macroscopique de phases au repos.

La phase organique est ajoutée à cette phase aqueuse en 1 minute sous agitation mécanique avec un agitateur de type ULTRA TURRAX tournant à 8000 tours/mn.

On poursuit l'agitation de l'émulsion obtenue dans un homogénéiseur haute pression MICROFLUIDICS M110S (500 bars de pression d'homogénéisation).

### - Propriétés de l'émulsion (granulométrie) :

La granulométrie de l'émulsion ainsi obtenue est mesurée 1 heure et 15 jours après sa préparation à l'aide d'un granulomètre à diffraction laser de type HORIBA.

| **Emulsion** | **% copol / Phase Orga.** | **Temps (jours)** | **Diamètre médian (µm)** |
|---|---|---|---|
| **P2** PABu-PAA 1000-4000 | 1,25 | 0 | 1,3 |
| | | 15 | 1,5 |
| | 2,5 | 0 | 0,8 |
| | | 15 | 0,9 |
| | 5 | 0 | 0,4 |
| | | 15 | 0,5 |
| | 10 | 0 | 0,4 |
| | | 15 | 0,5 |
| **P5** PABu-PAM 1000-4000 | 1,25 | 0 | 1,7 |
| | | 15 | 2,0 |
| | 2,5 | 0 | 1,0 |
| | | 15 | 1,1 |
| | 5 | 0 | 0,7 |
| | | 15 | 0,7 |
| | 10 | 0 | 0,4 |
| | | 15 | 0,4 |

### Exemple 5

Cet exemple a pour objet de démontrer l'existence d'une synergie entre le copolymère et le tensioactif (alkylpolyglucoside).

### - Préparation de l'émulsion :

L'émulsion est préparée selon le même mode opératoire que celui décrit dans l'exemple 2.

### - Propriétés de l'émulsion (granulométrie et stabilité) :

La granulométrie de l'émulsion ainsi obtenue est mesurée 1 heure et 8 jours après sa préparation à l'aide d'un granulomètre à diffraction laser de type HORIBA.

De plus, on mesure la granulométrie de la dispersion 24 heures après l'avoir diluée à 10 % dans de l'eau de ville.

| **Composition de l'émulsion** | **Age de l'émulsion** | **Diamètre médian (µm)** |
|---|---|---|
| 5 % Plantaren 2000 | 1 heure | 2,9 |
| | 8 jours | 3,0 |
| Dilution à 10 % | 24 heures | 3,4 |
| 2 % **P2** | 1 heure | 1,0 |
| PABu-b-PAM 2000-b-3000 | 8 jours | 1,0 |
| Dilution à 10 % | 24 heures | 1,0 |
| 1 % Plantaren 2000 | 1 heure | 0,39 |
| 1 % **P2** | 8 jours | 0,38 |
| PABu-b-PAM 2000-b-3000 | | |
| Dilution à 10 % | 24 heures | 0,38 |

## Revendications

1. Dispersion comprenant au moins une émulsion d'une phase organique dans une phase aqueuse ; la phase aqueuse comprenant une teneur en sel soluble d'au moins 1 mol/l, **caractérisée en ce que** la phase aqueuse comprend au moins un copolymère à blocs amphiphile, comprenant au moins un bloc hydrophile et au moins un bloc hydrophobe, choisi parmi les copolymères :
(i) qui ne font pas apparaître de séparation macroscopique de phases en solution à 1% poids, dans un mélange eau et KBr ; la concentration en KBr étant identique à celle sel soluble de la dispersion, à 20°C ;
(ii) dont le rapport massique bloc(s) hydrophile(s) / bloc(s) hydrophobe(s) est compris entre 40/60 et 95/5.

2. Dispersion selon la revendication précédente, **caractérisée en ce que** le copolymère est choisi parmi ceux dont le rapport massique bloc(s) hydrophile(s) / bloc(s) hydrophobe(s) est compris entre 50/50 et 90/10.

3. Dispersion selon l'une des revendications précédentes, **caractérisée en ce que** les blocs hydrophiles du copolymère sont obtenus en mettant en oeuvre, en tant que monomère hydrophile, au moins un monomère hydrophile ionique ou potentiellement ionisable, plus particulièrement anionique ou cationique, et/ou au moins un monomère hydrophile non ionique.

4. Dispersion selon l'une des revendications précédentes, **caractérisée en ce que** les monomères hydrophiles anioniques comprennent au moins une fonction carboxylique, sulfonique, sulfurique, phosphonique, phosphorique, sulfosuccinique, ou les sels correspondants.

5. Dispersion selon la revendication précédente, **caractérisée en ce que** les monomères hydrophiles anioniques sont choisis parmi :
- les acides mono- ou poly- carboxyliques linéaires, ramifiés, cycliques ou aromatiques, les dérivés N-substitués de tels acides, les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs précurseurs, leurs dérivés sulfoniques ou phosphoniques, ainsi que les macromonomères dérivant de tels monomères ; les monomères ou macromonomères pouvant être sous la forme de sels.

6. Dispersion selon l'une des revendications précédentes, **caractérisée en ce que** les monomères hydrophiles cationiques sont choisis parmi :
- les (méth)acrylates d'aminoalkyle, les (méth)acrylamides d'aminoalkyle ;
- les monomères comprenant au moins une fonction amine secondaire, tertiaire ou quaternaire, ou un groupe hétérocyclique contenant un atome d'azote, la vinylamine, l'éthylène imine ;
- les sels d'ammonium de diallyldialkyl ;
seuls ou en mélanges, ou les sels correspondants de type ammonium, présentant un contre-ion choisi parmi les halogénures, les sulfates, les hydrosulfates, les alkylsulfates, les phosphates, les citrates, les formates, les acétates; ainsi que les macromonomères dérivant de tels monomères.

7. Dispersion selon l'une des revendications précédentes, **caractérisée en ce que** les monomères hydrophiles non ioniques sont choisis parmi : l'oxyde d'éthylène ; les amides des acides mono- ou poly- carboxyliques, linéaires, ramifiés, cycliques ou aromatiques, comprenant au moins une insaturation éthylénique ou dérivés, comme le (méth)acrylamide, le N-méthylol (méth)acrylamide ; les esters hydrophiles dérivant de l'acide (méth)acrylique comme par exemple le (méth)acrylate de 2-hydroxyéthyle ; les esters vinyliques permettant d'obtenir des blocs alcool polyvinylique après hydrolyse, comme l'acétate de vinyle, le Versatate® de vinyle, le propionate de vinyle ; les monomères du type des sucres comme les osides, les polyholosides fortement dépolymérisés.

8. Dispersion selon l'une des revendications précédentes, **caractérisée en ce que** les monomères hydrophiles sont choisis parmi l'acide acrylique ou ses sels, l'acrylamide, l'acide 2-acrylamido-2-méthyl-propanesulfonique ou ses sels, et l'acide styrène sulfonique ou ses sels, le chlorure de triméthyl ammonium de vinylbenzyle, seuls ou en mélanges, ou sous la forme de macromonomères.

9. Dispersion selon l'une des revendications précédentes, **caractérisée en ce que** l'un au moins des blocs hydrophiles est constitué par un ou plusieurs monomères hydrophiles ou par un mélange de monomère(s) hydrophile(s) et hydrophobe(s) ; la proportion pondérale en monomère(s) hydrophobe(s) représentant plus particulièrement moins de 50 % des monomères formant ledit bloc hydrophile, de préférence moins de 20 %.

10. Dispersion selon l'une des revendications précédentes, **caractérisée en ce que** les monomères hydrophobes sont choisis parmi :
- les esters des acides mono- ou poly- carboxyliques, linéaires, ramifiés, cycliques ou aromatiques, comprenant au moins une insaturation éthylénique,
- les nitriles αβ-éthyléniquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique,
seuls ou en mélanges, ainsi que les macromonomères dérivant de tels monomères.

11. Dispersion selon l'une des revendications précédentes, **caractérisée en ce que** les monomères hydrophobes sont choisis parmi les esters de l'acide acryliques avec les alcools linéaires ou ramifiés en C₁-C₄ tels que l'acrylate de méthyle, d'éthyle, de propyle et de butyle, les esters vinyliques comme l'acétate de vinyle, le styrène, l'α-méthylstyrène.

12. Dispersion selon l'une des revendications précédentes, **caractérisée en ce que** l'un au moins des blocs hydrophobes est constitué par un ou plusieurs monomères hydrophobes ou par un mélange de monomère(s) hydrophile(s) et hydrophobe(s) ; la proportion pondérale en monomère(s) hydrophile(s) représentant plus particulièrement moins de 50 % des monomères formant ledit bloc hydrophobe.

13. Dispersion selon l'une des revendications précédentes, **caractérisée en ce que** le copolymère est tel que la masse molaire en nombre de chaque bloc est comprise entre 500 et 100.10³ g/mol, de préférence entre 10³ et 50.10³ g/mol.

14. Dispersion selon l'une des revendications précédentes, **caractérisée en ce que** les copolymères sont sous forme linéaire.

15. Dispersion selon l'une des revendications précédentes, **caractérisée en ce que** les copolymères sont des diblocs.

16. Dispersion selon l'une des revendications précédentes, **caractérisée en ce que** la teneur en copolymère dans la dispersion représente plus particulièrement au moins 1 % en poids par rapport à la phase organique, de manière avantageuse de 2 à 20 % en poids par rapport à la phase organique, et de préférence entre 2 et 10 % en poids par rapport à la phase organique.

17. Dispersion selon l'une des revendications précédentes, **caractérisée en ce que** la concentration en sel soluble dans la phase aqueuse est supérieure ou égale à 2 mol/l.

18. Dispersion selon l'une des revendications précédentes, **caractérisée en ce que** le sel soluble est choisi parmi les matières actives utilisables dans le domaine phytosanitaire.

19. Dispersion selon la revendication 18, **caractérisée en ce que** la matière active est choisie parmi le glyphosate, le sulphosate, le glufosinate, sous la forme de sels de métaux alcalins ; sous la forme de sels d'ammonium, de type N(R)₄⁺ pour lequel les radicaux R, identiques ou différents, représentent un atome d'hydrogène ou un radical hydrocarboné en C₁-C₆, linéaire ou non, saturé ou non, éventuellement substitué par un groupement hydroxyle ; ou encore sous la forme de sels de sulfonium ; lesdits sels étant présents seuls ou en combinaison.

20. Dispersion selon l'une des revendications précédentes, **caractérisée en ce qu'**elle comprend un solide dispersé dans la phase aqueuse.

21. Dispersion selon l'une des revendications précédentes, **caractérisée en ce que** la phase organique de l'émulsion est choisie parmi les composés organiques qui se trouvent sous une forme liquide à la température de préparation de la dispersion, ou bien encore parmi ceux qui se trouvent liquides à la température d'utilisation de ladite dispersion, voire ces deux possibilités simultanément.

22. Dispersion selon la revendication précédente, **caractérisée en ce que** la phase organique de la dispersion est choisie parmi les huiles, les cires ou les graisses organiques d'origine végétale ou animale ; les huiles ou cires minérales ; les produits issus de l'alcoolyse des huiles précitées ; les acides gras, saturés ou non ; les esters de tels acides ; les alcools gras, saturés ou non ; les solvants hydrocarbonés aliphatiques ou aromatiques ; les coupes pétrolières ; seuls ou en mélange.

23. Dispersion selon l'une des revendications précédentes, **caractérisée en ce que** la phase organique peut comprendre une ou plusieurs matières actives se trouvant sous une forme soluble dans ladite phase organique ou bien solubilisée dans celle-ci, ou même constituer une matière active en elle-même.

24. Dispersion selon l'une des revendications précédentes, **caractérisée en ce que** la proportion pondérale de phase organique dans la dispersion représente 5 à 50 % en poids, de préférence 10 à 30 % en poids.

25. Dispersion selon l'une des revendications précédentes, **caractérisée en ce que** la dispersion comprend au moins un tensioactif soluble dans la phase aqueuse.

26. Dispersion selon la revendication précédente, **caractérisée en ce que** le tensioactif est choisi parmi les alkylpolyglucosides.

27. Dispersion selon la revendication précédente, **caractérisée en ce que** la teneur en tensioactif représente au maximum 50 % en poids, du poids de l'ensemble tensioactif / copolymère.

28. Dispersion selon l'une des revendications précédentes, **caractérisée en ce que** la phase aqueuse de la dispersion comprend un activateur biologique de la ou des matières actives sous forme de sel soluble dans l'eau.

29. Dispersion selon la revendication précédente, **caractérisée en ce que** la teneur en activateur biologique représente jusqu'à 40 % en poids de la ou des matières actives.

30. Dispersion sous forme sèche, obtenue par séchage d'une dispersion selon l'une des revendications précédentes.

31. Procédé de préparation d'une dispersion selon l'une des revendications précédentes, **caractérisé en ce que** l'on prépare une solution aqueuse de copolymère, de sel soluble, puis on ajoute progressivement la phase organique comprenant éventuellement une matière active.

32. Procédé de préparation selon la revendication précédente, **caractérisé en ce que** l'on ajoute le solide dispersé à l'émulsion, une fois celle-ci obtenue.

33. Procédé de préparation selon l'une des revendications 31 ou 32, **caractérisé en ce que** l'on effectue une étape de séchage une fois la dispersion obtenue.

34. Procédé de préparation selon la revendication précédente, **caractérisé en ce que** l'on ajoute à la dispersion une fois obtenue, une quantité supplémentaire de copolymère de manière à ce que la teneur totale de ce dernier, en poids sec, soit comprise entre 10 et 20 % en poids par rapport à la phase organique.

35. Procédé de préparation selon l'une des revendications 33 ou 34, **caractérisé en ce que** l'on effectue le séchage en étuve, de préférence, en couche mince ; par atomisation, par lyophilisation (congélation-sublimation), ou en utilisant un tambour Duprat®.

36. Utilisation de la dispersion selon l'une des revendications 1 à 30, ou susceptible d'être obtenue selon l'une des revendications 31 à 35, dans le domaine des formulations phytosanitaires.

## Claims

1. Dispersion comprising at least one emulsion of an organic phase in an aqueous phase; the aqueous phase having a content of soluble salt of at least 1 mol/l, **characterized in that** the aqueous phase contains at least one amphiphilic block copolymer, comprising at least one hydrophilic block and at least one hydrophobic block, selected from the copolymers:
(i) which do not cause macroscopic phase separation in solution at 1 wt. %, in a mixture of water and KBr; the concentration of KBr being identical to that of soluble salt of the dispersion, at 20°C;
(ii) whose mass ratio of hydrophilic block(s) to hydrophobic block(s) is between 40/60 and 95/5.

2. Dispersion according to the preceding claim, **characterized in that** the copolymer is selected from those whose mass ratio of hydrophilic block(s) to hydrophobic block(s) is between 50/50 and 90/10.

3. Dispersion according to either of the preceding claims, **characterized in that** the hydrophilic blocks of the copolymer are obtained by employing, as hydrophilic monomer, at least one ionic or potentially ionizable hydrophilic monomer, more particularly anionic or cationic, and/or at least one nonionic hydrophilic monomer.

4. Dispersion according to one of the preceding claims, **characterized in that** the anionic hydrophilic monomers contain at least one carboxylic, sulphonic, sulphuric, phosphonic, phosphoric, or sulphosuccinic function, or the corresponding salts.

5. Dispersion according to the preceding claim, **characterized in that** the anionic hydrophilic monomers are selected from:
- the linear, branched, cyclic or aromatic mono- or polycarboxylic acids, the N-substituted derivatives of said acids, the monoesters of polycarboxylic acids, containing at least one ethylenic unsaturation;
- the linear, branched, cyclic or aromatic vinylcarboxylic acids;
- the amino acids containing one or more ethylenic unsaturations;
individually or mixed, their precursors, their sulphonic or phosphonic derivatives, as well as the macromonomers derived from said monomers; it being possible for the monomers or macromonomers to be in the form of salts.

6. Dispersion according to one of the preceding claims, **characterized in that** the cationic hydrophilic monomers are selected from:
- the aminoalkyl (meth)acrylates, the aminoalkyl (meth)acrylamides;
- monomers containing at least one secondary, tertiary or quaternary amine function, or a heterocyclic group containing a nitrogen atom, vinylamine, ethyleneimine;
- diallyldialkylammonium salts;
individually or mixed, or the corresponding salts of ammonium type having a counterion selected from the halides, the sulphates, the hydrosulphates, the alkylsulphates, the phosphates, the citrates, the formates, or the acetates; as well as the macromonomers derived from said monomers.

7. Dispersion according to one of the preceding claims, **characterized in that** the nonionic hydrophilic monomers are selected from: ethylene oxide; the amides of linear, branched, cyclic or aromatic mono- or polycarboxylic acids, containing at least one ethylenic unsaturation or derivatives, such as (meth)acrylamide, N-methylol(meth)acrylamide; the hydrophilic esters derived from (meth)acrylic acid, for example 2-hydroxyethyl (meth)acrylate; vinyl esters by means of which it is possible to obtain polyvinyl alcohol blocks after hydrolysis, such as vinyl acetate, vinyl Versatate®, vinyl propionate; monomers of the sugar type such as osides, highly depolymerized polyholosides.

8. Dispersion according to one of the preceding claims, **characterized in that** the hydrophilic monomers are selected from acrylic acid or its salts, acrylamide, 2-acrylamido-2-methylpropanesulphonic acid or its salts, and styrenesulphonic acid or its salts, vinylbenzyl trimethylammonium chloride, individually or in mixtures, or in the form of macromonomers.

9. Dispersion according to one of the preceding claims, **characterized in that** at least one of the hydrophilic blocks is made up of one or more hydrophilic monomers or of a mixture of hydrophilic and hydrophobic monomer(s); the proportion by weight of hydrophobic monomer(s) representing more particularly less than 50% of the monomers forming said hydrophilic block, and preferably less than 20%.

10. Dispersion according to one of the preceding claims, **characterized in that** the hydrophobic monomers are selected from:
- the linear, branched, cyclic or aromatic esters of mono- or polycarboxylic acids, containing at least one ethylenic unsaturation,
- α,β-ethylenically unsaturated nitriles, vinyl ethers, vinyl esters, vinylaromatic monomers, halides of vinyl or of vinylidene,
- linear or branched, aromatic or non-aromatic hydrocarbon monomers, containing at least one ethylenic unsaturation,
individually or mixed, as well as the macromonomers derived from said monomers.

11. Dispersion according to one of the preceding claims, **characterized in that** the hydrophobic monomers are selected from the esters of acrylic acid with linear or branched C₁-C₄ alcohols such as methyl, ethyl, propyl and butyl acrylate, the vinyl esters such as vinyl acetate, styrene, α-methylstyrene.

12. Dispersion according to one of the preceding claims, **characterized in that** at least one of the hydrophobic blocks is made up of one or more hydrophobic monomers or of a mixture of hydrophilic and hydrophobic monomer(s); the proportion by weight of hydrophilic monomer(s) representing more particularly less than 50% of the monomers forming said hydrophobic block.

13. Dispersion according to one of the preceding claims, **characterized in that** the copolymer is such that the number-average molar mass of each block is between 500 and 100.10³ g/mol, preferably between 10³ and 50.10³ g/mol.

14. Dispersion according to one of the preceding claims, **characterized in that** the copolymers are of linear form.

15. Dispersion according to one of the preceding claims, **characterized in that** the copolymers are diblocks.

16. Dispersion according to one of the preceding claims, **characterized in that** the content of copolymer in the dispersion represents more particularly at least 1 wt.% relative to the organic phase, advantageously from 2 to 20 wt.% relative to the organic phase, and preferably between 2 and 10 wt.% relative to the organic phase.

17. Dispersion according to one of the preceding claims, **characterized in that** the concentration of salt soluble in the aqueous phase is greater than or equal to 2 mol/l.

18. Dispersion according to one of the preceding claims, **characterized in that** the soluble salt is selected from the active substances that can be used in the area of plant protection.

19. Dispersion according to Claim 18, **characterized in that** the active substance is selected from glyphosate, sulphosate, glufosinate, in the form of alkali metal salts; in the form of ammonium salts, of type N(R)₄⁺ for which the R radicals, identical or different, represent a hydrogen atom or a linear or non-linear, saturated or unsaturated C₁-C₆ hydrocarbon radical, possibly substituted by a hydroxyl group; or alternatively in the form of sulphonium salts; said salts being present individually or in combination.

20. Dispersion according to one of the preceding claims, **characterized in that** it comprises a solid dispersed in the aqueous phase.

21. Dispersion according to one of the preceding claims, **characterized in that** the organic phase of the emulsion is selected from the organic compounds that are in a liquid form at the temperature of preparation of the dispersion, or alternatively from those that are liquid at the temperature of use of said dispersion, or even these two possibilities simultaneously.

22. Dispersion according to the preceding claim, **characterized in that** the organic phase of the dispersion is selected from organic oils, waxes or fats of vegetable or animal origin; mineral oils or waxes; products from the alcoholysis of the aforementioned oils; saturated or unsaturated fatty acids; esters of said acids; saturated or unsaturated fatty alcohols; aliphatic or aromatic hydrocarbon solvents; petroleum fractions; individually or mixed.

23. Dispersion according to one of the preceding claims, **characterized in that** the organic phase can contain one or more active substances that are in a form that is soluble in said organic phase or alternatively are dissolved in the latter, or it can even constitute an active substance itself.

24. Dispersion according to one of the preceding claims, **characterized in that** the proportion by weight of organic phase in the dispersion represents 5 to 50 wt.%, preferably 10 to 30 wt.%.

25. Dispersion according to one of the preceding claims, **characterized in that** the dispersion contains at least one surfactant that is soluble in the aqueous phase.

26. Dispersion according to the preceding claim, **characterized in that** the surfactant is selected from the alkylpolyglucosides.

27. Dispersion according to the preceding claim, **characterized in that** the content of surfactant represents at most 50 wt.% of the combined weight of surfactant + copolymer.

28. Dispersion according to one of the preceding claims, **characterized in that** the aqueous phase of the dispersion contains a biological activator of the active substance or substances in the form of watersoluble salt.

29. Dispersion according to the preceding claim, **characterized in that** the content of biological activator represents up to 40 wt.% of the active substance or substances.

30. Dispersion in a dry form, obtained by drying a dispersion according to one of the preceding claims.

31. Method of preparation of a dispersion according to one of the preceding claims, **characterized in that** an aqueous solution of copolymer, of soluble salt, is prepared, then the organic phase, possibly containing an active substance, is added progressively.

32. Method of preparation according to the preceding claim, **characterized in that** the dispersed solid is added to the emulsion, once the latter is obtained.

33. Method of preparation according to either of Claims 31 and 32, **characterized in that** a drying step is carried out once the.dispersion is obtained.

34. Method of preparation according to the preceding claim, **characterized in that** an additional quantity of copolymer is added to the dispersion once obtained, in such a way that the total content of the copolymer, in dry weight, is between 10 and 20 wt.% relative to the organic phase.

35. Method of preparation according to either of Claims 33 and 34, **characterized in that** the drying is carried out in a stove, preferably in a thin layer; by spraying, by lyophilization (freezing-sublimation), or using a Duprat® drum.

36. Use of the dispersion according to one of Claims 1 to 30, or that can be obtained according to one of Claims 31 to 35, in the area of plant protection formulations.

## Patentansprüche

1. Dispersion mit wenigstens einer Emulsion einer organischen Phase in einer wässrigen Phase; wobei die wässrige Phase einen Gehalt an löslichem Salz von wenigstens 1 mol/l aufweist, **dadurch gekennzeichnet, dass** die wässrige Phase wenigstens ein amphiphiles Blockcopolymer mit wenigstens einem hydrophilen Block und wenigstens einem hydrophoben Block aufweist, das aus den folgenden Copolymeren gewählt ist:
(i) welche keine makroskopische Phasentrennung in einer 1 Gew.-%igen Lösung in einer Mischung aus Wasser und KBr auftreten lassen; wobei die Konzentration an KBr mit der an löslichem Salz der Dispersion identisch ist, bei 20°C;
(ii) deren Massenverhältnis hydrophile(r) Block (Blöcke) / hydrophobe(r) Block (Blöcke) zwischen 40/60 und 95/5 liegt.

2. Dispersion gemäß dem vorausgegangenen Anspruch, **dadurch gekennzeichnet, dass** das Copolymer aus jenen gewählt ist, deren Massenverhältnis hydrophile(r) Block (Blöcke) / hydrophobe(r) Block (Blöcke) zwischen 50/50 und 90/10 liegt.

3. Dispersion gemäß einem der vorausgegangenen Ansprüche, **dadurch gekennzeichnet, dass** die hydrophilen Blöcke des Copolymers erhalten werden, indem als hydrophiles Monomer wenigstens ein ionisches oder potenziell ionisierbares, genauer anionisches oder kationisches, hydrophiles Monomer und/oder wenigstens ein nicht ionisches hydrophiles Monomer verwendet wird.

4. Dispersion gemäß einem der vorausgegangenen Ansprüche, **dadurch gekennzeichnet, dass** die anionischen hydrophilen Polymere wenigstens eine Carboxyl-, Sulfon-, Schwefel-, Phosphon-, Phosphor-, Sulfobernsteinfunktion oder die entsprechenden Salze aufweist.

5. Dispersion gemäß dem vorausgegangenen Anspruch, **dadurch gekennzeichnet, dass** die anionischen hydrophilen Monomere gewählt sind aus:
- linearen, verzweigten, cyclischen oder aromatischen Mono- oder Polycarbonsäuren, den N-substituierten Derivaten dieser Säuren, den Monoestern von Polycarbonsäuren, welche wenigstens einfach ethylenisch ungesättigt sind;
- linearen, verzweigten, cyclischen oder aromatischen Vinylcarbonsäuren;
- Aminosäuren, welche einfach oder mehrfach ethylenisch ungesättigt sind;
einzeln oder in Mischungen, deren Vorläufer, deren Sulfon- oder Phosphonderivate sowie die Makromonomere, die von diesem Monomeren stammen; die Monomere oder Makromonomere können in Form von Salzen vorliegen.

6. Dispersion gemäß einem der vorausgegangenen Ansprüche, **dadurch gekennzeichnet, dass** die kationischen hydrophilen Monomere gewählt sind aus:
- Aminoalkyl(meth)acrylaten, Aminoalkyl(meth)acrylamiden;
- Monomeren mit wenigstens einer sekundären, tertiären oder quartären Aminfunktion oder einer heterocyclischen Gruppe, die ein Stickstoffatom enthält, Vinylamin, Ethylenimin;
- Diallyldialkylammoniumsalze;
einzeln oder in Mischungen oder die entsprechenden Ammoniumsalze, welche ein Gegenion aufweisen, das aus den Halogeniden, Sulfaten, Hydrogensulfaten, Alkylsulfaten, Phosphaten, Citraten, Formiaten, Acetaten gewählt ist; sowie den Makromonomeren, die von diesem Monomeren stammen.

7. Dispersion gemäß einem der vorausgegangenen Ansprüche, **dadurch gekennzeichnet, dass** die nicht ionischen hydrophilen Monomere gewählt sind aus: Ethylenoxid; den Amiden von linearen, verzweigten, cyclischen oder aromatischen Mono- oder Polycarbonsäuren, welche wenigstens einfach ethylenisch ungesättigt sind oder Derivate, wie (Meth)Acrylamid, N-Methylol(meth)acrylamid; den hydrophilen Estern, die von (Meth)Acrylsäure stammen, wie zum Beispiel 2-Hydroxyethyl(meth)acrylat; den Vinylestern, welche es ermöglichen, nach Hydrolyse Polyvinylalkoholblöcke zu erhalten, wie Vinylacetat, Vinylversatat® von Vinyl, Vinylpropionat; den Monomeren der Art Zucker, wie die Glykoside (Oside), stark depolymerisierte Polyholoside.

8. Dispersion gemäß einem der vorausgegangenen Ansprüche, **dadurch gekennzeichnet, dass** die hydrophilen Monomere gewählt sind aus Acrylsäure oder deren Salzen, Acrylamid, 2-Acrylamido-2-methylpropansulfonsäure oder deren Salzen und Styrolsulfonsäure oder deren Salzen, Trimethylammoniumvinylbenzylchlorid, einzeln oder in Mischungen, oder in Form von Makromonomeren.

9. Dispersion gemäß einem der vorausgegangenen Ansprüche, **dadurch gekennzeichnet, dass** wenigstens einer der hydrophilen Blöcke aus einem oder mehreren hydrophilen Monomeren oder aus einer Mischung aus hydrophilem(n) und hydrophobem(n) Monomer(en) gebildet ist; wobei das Gewichtsverhältnis an hydrophobem(n) Monomer(en) insbesondere weniger als 50% der Monomere darstellt, die den hydrophilen Block bilden, vorzugsweise weniger als 20%.

10. Dispersion gemäß einem der vorausgegangenen Ansprüche, **dadurch gekennzeichnet, dass** die hydrophoben Monomere gewählt sind aus:
- den Estern von linearen, verzweigten, cyclischen oder aromatischen Mono- oder Polycarbonsäuren, welche wenigstens einfach ethylenisch ungesättigt sind,
- den αβ-ethylenisch ungesättigten Nitrilen, den Vinylethern, Vinylestern, vinylaromatischen Monomeren, Vinyl- oder Vinylidenhalogeniden,
- Kohlenwasserstoffmonomeren, linear oder verzweigt, aromatisch oder nicht, welche wenigstens einfach ethylenisch ungesättigt sind;
einzeln oder in Mischungen, sowie die Makromonomere, die von diesen Monomeren stammen.

11. Dispersion gemäß einem der vorausgegangenen Ansprüche, **dadurch gekennzeichnet, dass** die hydrophoben Monomere gewählt sind aus den Acrylsäureestern mit an C1-C4 linearen oder verzweigten Alkoholen wie beispielsweise Methyl-, Ethyl-, Propyl- und Butylacrylat, den Vinylestern wie Vinylacetat, Styrol, α-Methylstyrol.

12. Dispersion gemäß einem der vorausgegangenen-Ansprüche, **dadurch gekennzeichnet, dass** wenigstens einer der hydrophoben Blöcke aus einem oder mehreren hydrophoben Monomeren oder aus einer Mischung aus hydrophilem(n) und hydrophobem(n) Monomer(en) gebildet ist; wobei das Gewichtsverhältnis an hydrophilem(n) Monomer(en) insbesondere weniger als 50% der Monomere darstellt, die dem hydrophoben Block bilden.

13. Dispersion gemäß einem der vorausgegangenen Ansprüche, **dadurch gekennzeichnet, dass** das Copolymer derart ist, dass die Molmasse jedes Blocks zwischen 500 und 100*10³ g/mol, vorzugsweise zwischen 10³ und 50*10³ g/mol liegt.

14. Dispersion gemäß einem der vorausgegangenen Ansprüche, **dadurch gekennzeichnet, dass** die Copolymere in linearer Form vorliegen.

15. Dispersion gemäß einem der vorausgegangenen Ansprüche, **dadurch gekennzeichnet, dass** die Copolymere Diblöcke sind.

16. Dispersion gemäß einem der vorausgegangenen Ansprüche, **dadurch gekennzeichnet, dass** der Gehalt an Copolymer in der Dispersion insbesondere wenigstens 1 Gew.-% bezogen auf die organische Phase, vorteilhafterweise 2 bis 20 Gew.-% bezogen auf die organische Phase, und ganz bevorzugt zwischen 2 und 10 Gew.-% bezogen auf die organische Phase darstellt.

17. Dispersion gemäß einem der vorausgegangenen Ansprüche, **dadurch gekennzeichnet, dass** die Konzentration an löslichem Salz in der wässrigen Phase größer oder gleich 2 mol/l ist.

18. Dispersion gemäß einem der vorausgegangenen Ansprüche, **dadurch gekennzeichnet, dass** das lösliche Salz aus den Wirkstoffen gewählt ist, die im Pflanzenschutzbereich verwendbar sind.

19. Dispersion gemäß Anspruch 18, **dadurch gekennzeichnet, dass** der Wirkstoff gewählt ist aus Glyphosat, Sulfosat, Glufosinat, in Form von Alkalimetallsalzen; in Form von Ammoniumsalzen der Art N(R)₄⁺, für welche die Radikale R, identisch oder verschieden, ein Wasserstoffatom oder eine Kohlenstoffradikal mit C₁-C₆, linear oder nicht, gesättigt oder nicht, gegebenenfalls durch eine Hydroxylgruppe substituiert, darstellen; oder auch in Form von Sulfoniumsalzen; wobei die Salze einzeln oder in Kombination vorhanden sind.

20. Dispersion gemäß einem der vorausgegangenen Ansprüche, **dadurch gekennzeichnet, dass** diese einen in der wässrigen Phase dispergierten Feststoff aufweist.

21. Dispersion gemäß einem der vorausgegangenen Ansprüche, **dadurch gekennzeichnet, dass** die organische Phase der Emulsion aus den organischen Verbindungen gewählt ist, die bei der Herstellungstemperatur der Dispersion in flüssiger Form vorliegen, oder auch aus jenen gewählt ist, die bei der Verwendungstemperatur der Dispersion in flüssiger Form vorliegen, oder beides zusammen.

22. Dispersion gemäß dem vorausgegangenen Anspruch, **dadurch gekennzeichnet, dass** die organische Phase der Dispersion gewählt ist aus den Ölen, Wachsen oder organischen Fetten pflanzlicher oder tierischer Herkunft; den Mineralölen oder - wachsen; den Produkten, die aus der Alkoholyse der vorgenannten Öle hervorgehen; den Fettsäuren, gesättigt oder nicht; den Estern dieser Säuren; den Fettalkoholen, gesättigt oder nicht; den aliphatischen oder aromatischen Kohlenwasserstofflösungsmitteln; den Erdölfraktionen; einzeln oder als Mischung.

23. Dispersion gemäß einem der vorausgegangenen Ansprüche, **dadurch gekennzeichnet, dass** die organische Phase einen oder mehrere Wirkstoffe aufweisen kann, die in löslicher Form in der organischen Phase vorliegen oder schon in dieser gelöst sind, oder auch selber einen Wirkstoff bilden kann.

24. Dispersion gemäß einem der vorausgegangenen Ansprüche, **dadurch gekennzeichnet, dass** das Gewichtsverhältnis der organischen Phase in der Dispersion 5 bis 50 Gew.-%, vorzugsweise 10 bis 30 Gew.-% darstellt.

25. Dispersion gemäß einem der vorausgegangenen Ansprüche, **dadurch gekennzeichnet, dass** die Dispersion wenigstens ein in der wässrigen Phase lösliches Tensid aufweist.

26. Dispersion gemäß dem vorausgegangenen Anspruch, **dadurch gekennzeichnet, dass** das Tensid aus den Alkylpolyglukosiden gewählt ist.

27. Dispersion gemäß dem vorausgegangenen Anspruch, **dadurch gekennzeichnet, dass** der Gehalt an Tensid maximal 50 Gew.-% des Gewichts der Gesamtheit Tensid / Copolymer darstellt.

28. Dispersion gemäß einem der vorausgegangenen Ansprüche, **dadurch gekennzeichnet, dass** die wässrige Phase der Dispersion einen biologischen Aktivator für den (die) Wirkstoff(e) in Form von in Wasser löslichem Salz aufweist.

29. Dispersion gemäß dem vorausgegangenen Anspruch, **dadurch gekennzeichnet, dass** der Gehalt an biologischem Aktivator bis zu 40 Gew.-% des Wirkstoffs / der Wirkstoffe darstellt.

30. Dispersion in trockener Form, die durch Trocknen einer Dispersion gemäß einem der vorausgegangenen Ansprüche erhalten wurde.

31. Verfahren zur Herstellung einer Dispersion gemäß einem der vorausgegangenen Ansprüche, **dadurch gekennzeichnet, dass** eine wässrige Lösung aus Copolymer, löslichem Salz hergestellt wird, dann allmählich die organische Phase, die gegebenenfalls einen Wirkstoff aufweist, hinzugegeben wird.

32. Verfahren zur Herstellung gemäß dem vorausgegangenen Anspruch, **dadurch gekennzeichnet, dass** der dispergierte Feststoff zu der Emulsion, wenn diese erhalten wurde, hinzugegeben wird.

33. Verfahren zur Herstellung gemäß einem der Ansprüche 31 oder 32, **dadurch gekennzeichnet, dass** ein Schritt des Trocknens durchgeführt wird, nachdem die Dispersion erhalten wurde.

34. Verfahren zur Herstellung gemäß dem vorausgegangenen Anspruch, **dadurch gekennzeichnet, dass** zu der Dispersion, nachdem diese erhalten wurde, eine zusätzliche Menge an Copolymer hinzugefügt wird, so dass der Gesamtgehalt des letztgenannten in Trockengewicht zwischen 10 und 20 Gew.-% bezogen auf die organische Phase darstellt.

35. Verfahren zur Herstellung gemäß einem der Ansprüche 33 oder 34, **dadurch gekennzeichnet, dass** ein Trocknen im Wärmeschrank, vorzugsweise in dünner Schicht; durch Atomisierung, durch Gefriertrocknung (Erstarren-Sublimieren) oder unter Verwendung einer Duprat®-Trommel durchgeführt wird.

36. Verwendung der Dispersion gemäß einem der Ansprüche 1 bis 30, oder die geeignet ist, durch einen der Ansprüche 31 bis 35 erhalten zu werden, im Bereich von Pflanzenschutzformulierungen.
